# EUROPÄISCHE PATENTANMELDUNG

(11) **EP 3 889 676 A2**
(43) Veröffentlichungstag der Anmeldung: **06.10.2021**
(21) Anmeldenummer: 20214940.7
(22) Anmeldetag: 17.12.2020
(51) Int. Cl.: G02C 7/10, G02C 9/04, G02C 11/00

(54) **ÜBERZIEHSONNENBRILLE FÜR DAMEN UND HERREN**

(30) Priorität: 02.04.2020 DE 202020101807 U
(71) Anmelder: SCHEBLER, Jürgen, 45326 Essen (DE)
(72) Erfinder: SCHEBLER, Jürgen, 45326 Essen (DE)
(74) Vertreter: Schulte & Schulte

(57) **Zusammenfassung**

Eine Brille umfasst ein der Sehstärke des Benutzers angepasstes, klare Brillengläser 3, 4 aufweisendes Brillengestell 2 und einen Zusatz 50 mit Zusatzgestell 5 und mit getönten Brillengläsern 6, 7 zum Schutz der Augen eines Menschen vor den schädlichen Auswirkungen des Sonnenlichtes, wobei das die getönten Brillengläser 6, 7 aufweisende und der Form des Brillengestells 2 angepasste Zusatzgestell 5 mit dem Brillengestell 2 zu einer Einheit zusammengefügt ist. Das Brillengestell 2 mit den klaren Brillengläsern 3, 4 und das Zusatzgestell 5 mit den getönten Brillengläsern 6, 7 sind über eine auf die Ränder 8, 9 der Brillenglasumfassungen 10, 11 klemmbare Brillenspange 15 lösbar miteinander verbunden.

## Beschreibung

Die Neuerung betrifft eine Brille mit einem der Sehstärke des Benutzers angepassten klare Brillengläsern aufweisenden Brillengestell und einem Zusatz mit Zusatzgestell und mit getönten Brillengläsern zum Schutz der Augen eines Menschen vor den schädlichen Auswirkungen des Sonnenlichtes, wobei das die getönten Brillengläser aufweisende und der Form des Brillengestells angepasste Zusatzgestell mit dem Brillengestell zu einer Einheit zusammengefügt ist.

Derartige Brillen sind allgemein bekannt. Meist wird der Zusatz unter weitgehender Einsparung des Zusatzgestells mit seinen getönten Brillengläsern auf das Brillengestell mit den klaren Brillengläsern aufgeklipst. Das reduziert ausgeführte Zusatzgestell besteht dabei eigentlich nur aus hakenförmigen Greifern, die von oben her auf das Brillengestell aufgeschoben werden, wobei dann diese Greifer im Bereich der Nase des Benutzers für ein weitgehend enges Anliegen dieses Zusatzgestells mit den getönten Brillengläsern an das andere Brillengestell Sorge trägt. Da diese Spangen meist nur mittig angeordnet sind, liegen die linken und rechten Seitenbereiche der getönten Brillengläser nicht immer an den klaren Brillengläsern des Brillengestells an, was bei empfindlichen Menschen zu Problemen führen kann, insbesondere dann, wenn die getönten Brillengläser auch noch geschliffene Brillengläser sind. Daher wird meist auf diese geschliffenen Brillengläser verzichtet. Wegen der leichten Ausführung des aufklipsbaren Zusatzgestells kommt es häufig vor, dass der Benutzer verzweifelt nach seinem Sonnenschutz sucht und dann unter Umständen auf die Brille mit klaren Brillengläsern verzichtet oder eine übliche, seinen Augen nicht angepasste Sonnenbrille allein verwendet. Nachteilig ist außerdem, dass die Brillengläser beider Gestelle die gleiche Größe aufweisen müssen, um den ungefilterten Zugang von Sonnenstrahlen sicher zu vermeiden. Um insbesondere das vergebliche Suchen des Sonnenschutzes zu vermeiden, sind auch Zusatzgestelle bekannt, die klappbar am Brillengestell festgelegt sind und somit bei Bedarf auf die klaren Brillengläser herabgeklappt werden können. Abgesehen von den schon erwähnten weiteren Problemen, ist hier nachteilig, dass das hochgeklappte Brillengestell mit den getönten Brillengläsern unvorteilhaft aussieht und von daher, insbesondere von Damen, nicht gern benutzt wird. Neuerdings werden "Doppelbrillen" angeboten, bei denen das Brillengestell mit den klaren Brillengläsern in das der "Sonnenbrille", also des Zusatzgestells mit den dunklen Brillengläsern hineingelegt wird. Die "Sonnenbrille" muss somit größer sein als das Brillengestell mit den klaren Brillengläsern. Da die "Sonnenbrille" natürlich für mehrere Brillengestellgrößen mit klaren Brillengläsern verwendbar sein soll, "klappern" meist diese Einheiten oder rutschen hin und her. Wegen einer fehlenden Verbindung beider Gestelle lassen sich auch häufig auftretende Sehbeschwerden nicht vermeiden.

Der Neuerung liegt die Aufgabe zu Grunde, eine Überziehsonnenbrille zu schaffen, deren die klaren Brillengläser und deren die getönten Brillengläser fixierenden Gestelle eine angenehm zu tragende und immer optimal sitzende Einheit bilden.

Die Aufgabe wird neuerungsgemäß dadurch gelöst, dass das Brillengestell mit den klaren Brillengläsern und das Zusatzgestell mit den getönten Brillengläsern über eine auf die Ränder der Brillenglasumfassungen klemmbare Brillenspange lösbar miteinander verbunden sind.

Mit einer derartigen Brillenspange ist es möglich, dass Zusatzgestell mit den getönten Brillengläsern so eng an das Brillengestell mit den klaren Brillengläsern anzulegen, dass nachteilige Sehbeeinträchtigungen nicht auftreten können. Beide Gestelle bilden somit eine vorteilhaft zu benutzende und zu tragende Einheit und zwar auch dann, wenn ihre Brillengläser nicht 100 %ig oder annähernd 100 %ig in ihren Abmaßen übereinstimmen. Das Zusatzgestell mit den getönten Brillengläsern wird vor das Brillengestell mit den klaren Brillengläsern geschoben und dann über die Brillenspange fest mit dem Brillengestell verbunden, weil die Brillenspange entsprechend den beiden Gestellen angepasste Maße hat, ist auch nach dem Aufschieben sichergestellt, dass beide Gestelle wirksam und ausreichend gesichert miteinander in Verbindung stehen.

Wenn das Brillengestell und das Zusatzgestell über eine von oben auf die oberen Ränder der Brillenglasumfassungen klemmbare Brillenspange lösbar miteinander verbunden sind, ist eine besonders effektive Verbindung zwischen den beiden Gestellen geschaffen.

Nach einer zweckmäßigen Ausbildung der Neuerung ist vorgesehen, dass die Brillenspange auf die Brillengläserumfassungen aufgeklipst ist. Dies bedeutet, dass die beiden Seitenflanken der Brillenspange beispielsweise über eine aus einer Feder bestehenden Rückenspange verbunden sind, sodass sie entsprechend auf die beiden Gestelle aufgeklipst werden können.

Eine weitere zweckmäßige Ausbildung sieht vor, dass die Brillenspange eine mit dem Zusatzgestell mit den getönten Brillengläsern korrespondierende Breite aufweist und von Bügelübergang zu Bügelübergang reichend ausgebildet ist. Damit ist sichergestellt, dass die Aneinanderkopplung beider Gestelle so ist, dass eine Abkopplung mittig, insbesondere aber im Seitenbereich auf jeden Fall unterbunden ist.

Die Kopplung beider Gestelle aneinander wird neuerungsgemäß noch dadurch verbessert, dass die Brillenspange an beiden Enden eine dem Bügelübergang des Brillengestells und Bügelübergang des Zusatzgestells angepasste Biegung aufweist. Da die seitlich am Brillengestell und am Zusatzgestell angebrachten Brillenbügel in Richtung Kopf des Benutzers und in Gegenrichtung biegbar sein müssen, wird am Übergang eine Biegung verwirklicht und diese wird ausgenutzt, um auch ein Verschieben der Brillenspange auf den beiden Gestellen sicher zu unterbinden.

Brillen sind Modeartikel und daher sind die Brillengestelle und auch die Zusatzgestelle immer wieder Änderungen unterworfen, sodass die Brillenspangen dann auch wieder diesen Gegebenheiten angepasst werden müssten. Um das zu vermeiden und ein immer sicheres und dichtes Anliegen beider Gestelle aneinander sicherzustellen, sieht die Neuerung vor, dass die Brillenspange auf den Innenflächen, die am Zusatzgestell und dem Brillengestell anliegen, eine begrenzt nachgiebige Beschichtung aufweist. Damit ist sichergestellt, dass auch unterschiedlich dicke Brillengläserumfassungen für das Aufbringen der Brillenspange keine Probleme darstellen.

Nach einer weiteren Ausbildung ist vorgesehen, dass die begrenzt nachgiebige Beschichtung durch ihre Dicke nur die Brillengläserumfassung vom Brillengestell oder vom Zusatzgestell allein fixierend ausgebildet ist. Damit ist die Möglichkeit gegeben, die Brillenspange beispielsweise dem Zusatzgestell zuzuordnen, was nur hin und wieder benutzt wird, sodass dann bei der Benutzung die Möglichkeit besteht, quasi das Brillengestell zusätzlich noch in die Brillenspange einzuschieben und so beide Gestelle miteinander wirksam zu verbinden.

Hersteller von solchen Brillen machen gerne deutlich, dass sie Hersteller der entsprechenden Brillen sind. Dazu stehen in der Regel breit ausgebildete Bügel der Brille zur Verfügung, wobei gemäß der Neuerung eine weitere Werbefläche möglich ist, indem die Brillenspange mittig mit einem Aufsatz ausgerüstet ist, der Werbeflächen aufweist. Vorteil dieser Anordnung der Werbeflächen ist, dass sie immer im Blickfeld sind und von daher die Identifizierung der Brille leichter möglich machen.

Eine unter Umständen elegante Ausführung ist dann möglich, wenn die Brillenspange aus drei Teilspangen besteht, die lösbar miteinander verbunden sind. Neben einer mittigen, insbesondere den Nasenbügel überspannende Teilspange sind weitere Teilspangen möglich, die sich im Bereich der Biegung anordnen lassen, um so das wirksame und dichte Ankoppeln des Zusatzgestells an das Brillengestell zu ermöglichen.

Bei dieser Ausführung mit den Teilspangen kann nachteilig sein, dass sie leichter verloren gehen, was damit unterbunden wird, dass die Teilspangen miteinander und/oder mit dem Bügelgestell und/oder dem Zusatzgestell über ein Fixierelement verbunden sind. Hier bietet sich eine Schnur, Kette oder Ähnliches an, wobei alle drei Teilspangen eben auch miteinander so zu verbinden sind.

Bei besonders teuren Brillen ist eine Ausführung der Neuerung vorteilhaft, bei der die Brillenspange mit Haftmagneten ausgerüstet ist, die mit dem Brillengestell und dem Zusatzgestell zugeordneten Haftflächen korrespondierend angeordnet sind. Damit besteht die Möglichkeit, beim Überschieben der Brillenspange, die Haftmagnete zu aktivieren, sodass dann das dichte Aneinanderliegen und das sichere Aneinanderliegen der beiden Gestelle erreicht werden kann.

Je nach Sehbeeinträchtigung des Benutzers kommen unter Umständen relativ dicke und schwere Brillengläser zum Einsatz, wobei die Neuerung hierfür ausgerüstet ist, indem eine Gegenbrillenspange vorgesehen ist, die die unteren Rundungen der Brillengläser berücksichtigend und von unten auf das Zusatzgestell und das Brillengestell aufschiebbar ausgebildet ist. Damit wird eine wirksame Umfassung der beiden Gestelle sichergestellt, was auch bei schweren Brillengläsern eine wirksame Kombination ergibt.

Eine weitere Möglichkeit der Ausbildung der Brillenspange ist die, bei der sie eine starre Basis und zwei, eine Krallwirkung erzeugende Stützspangen aufweist, die an den Bügelübergängen Druck auf die klaren und die getönten Brillengläser ausübend auf diese aufschiebbar ausgebildet sind. Auf diese Weise werden beide Gestelle an den Außenbereichen so zusammengefasst, dass sie während der Tragphase eine stabile Einheit bilden.

Um jedwede Schäden an den Gläsern zu vermeiden, wiesen die freien Enden der Stützspangen aus begrenzt flexiblem Material bestehende Stützpunkte auf.

Eine vorteilhafte Sicherung des stabilen und richtigen Sitzes der beiden Gestelle ist die, bei der die Basis das Aufschieben auf die Bügel der Brillengestelle ermöglichende Ausnehmungen aufweisen. Die Brillengestelle können sich nicht unbeabsichtigt gegeneinander verschieben.

Während nach den meisten Ausführungsformen der Erfindung die Brillenspange diese von oben her auf die beiden Brillengestelle aufgeschoben wird, schlägt eine weitere Ausführungsform vor, die Brillenspange von der Seite her auf die Brillengestelle aufschiebbar auszubilden. Dabei können die beschriebenen Greifarme oder Stützspangen zum Einsatz kommen.

Bekannt sind auch Überzieh-Sonnenbrillen, bei denen das Brillengestell mit den klaren Brillengläsern quasi in das Zusatzgestell mit den getönten Brillengläsern eingelegt wird. Dabei ist dann nachteilig, dass sich beide Gestelle gegeneinander bewegen können, was für den Benutzer nicht nur lästig, sondern auch die Sehwirkung beeinträchtigend sein kann. Hierbei ist Gegenstand der Neuerung eine Brille mit der Sehstärke des Benutzers angepassten klaren Brillengläsern aufweisenden Brillengestell und einem Zusatz mit Zusatzgestell und mit getönten Brillengläsern zum Schutz der Augen eines Menschen vor den schädlichen Auswirkungen des Sonnenlichtes, wobei das Zusatzgestell brillenförmig ausgebildet und das Brillengestell mit den klaren Brillengläsern mit vorgegebener Sehstärke umfassend und dieses außen überdeckend ausgebildet ist, wobei der obere Rand des Zusatzgestells in Richtung Brillengestell verbreitert ausgeführt ist. Wie weiter vorne schon ausgeführt ist hier wiederum das Wackeln und Gegeneinanderbewegen beider Gestelle von erheblichem Nachteil, weil so gut wie nie beide Gestelle aufeinander angepasst sind.

Gemäß der Neuerung wird die weiter vorn erwähnte Aufgabe dadurch gelöst, dass das Zusatzgestell mit den getönten Brillengläsern am oberen Rand einen dachförmigen Rücksprung aufweist und dass mittig und/oder an beiden Seiten der Brillengläser ein aus nachgiebigem Material bestehender Puffer angeordnet ist, der sich am oberen Rand der getönten Brillengläser und am oberen Rand der klaren Brillengläser bzw. des Brillengestells abstützend ausgebildet ist. Damit ist sichergestellt, dass unabhängig von der Form und Größe der beiden Gestelle bzw. der Ausformung der Brillengläser ein immer dichtes Anliegen des Zusatzgestells am Brillengestell erreicht werden kann. Damit treten nachteilige Beeinträchtigungen nicht auf und vor allem der Sitzkomfort ist merkbar für den Benutzer verbessert, wobei es ohne weiteres möglich ist, dass diese Puffer auch getrennt am Brillengestell und am Zusatzgestell angebracht werden können, also nicht schon mit den Gestellen geliefert werden müssen. Sie haben dann auf der Rückseite entsprechende Befestigungsteile, um sie entweder am Brillengestell oder am Zusatzgestell festlegen zu können.

Die Neuerung zeichnet sich insbesondere dadurch aus, dass mit verhältnismäßig einfachen Formgebungen bzw. Neuerungen der Tragekomfort für derartige Brillenkombinationen deutlich verbessert werden kann. Da auf aufwendige Änderungen insbesondere am Zusatzgestell gemäß der Hauptausbildung der vorliegenden Neuerung verzichtet werden kann, ist nicht nur das vorteilhafte dichte Anliegen beider Gestelle aneinander gesichert, sondern die beiden Gestelle können auch getrennt voneinander ohne weiteres und ohne die nachteiligen Zusatzerweiterungen an den Gestellen getragen werden. Dies erreicht man insbesondere dadurch, dass für die Verbindung beider Gestelle ein getrenntes Bauteil eingesetzt wird, vorzugsweise in Form der Brillenspange, die von oben und/oder auch von unten her auf die beiden Brillengläserumfassungen von aneinanderliegenden Gestellen aufgeschoben wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Brillengestell und ein noch nicht ganz darauf geschobenes Zusatzgestell mit Brillenspange. Zusätzlich ist eine Gegenbrillenspange vorgesehen, die aber nur in besonderen Fällen eingesetzt wird,
- Figur 2a: eine Brillenspange in räumlicher Wiedergabe,
- Figur 2b: eine Draufsicht auf die Brillenspange,
- Figur 2c: eine Seitenansicht der Brillenspange,
- Figur 2d: eine Brillenglasumfassung mit einem Haftmagnet,
- Figur 3a: eine Brillenspange mit Werbefläche in räumlicher Darstellung,
- Figur 3b: eine Brillenspange mit Werbefläche in Seitenansicht,
- Figur 4a: eine zweiteilige Brillenspange,
- Figur 4b: eine Draufsicht auf die zweiteilige Brillenspange,
- Figur 4c: eine Seitenansicht der zweiteiligen Brillenspange,
- Figur 4d: das Mittelteil einer mehrteiligen Brillenspange,
- Figur 5: Brillenspange mit länglichen Stützspangen,
- Figur 5a: Brillenspange in Seitenansicht mit länglichen Stützspangen
- Figur 6: Brillenspange von oben mit länglichen Stützspangen
- Figur 7: Brillenspange in perspektivischer Ansicht und
- Figur 8: eine Variante zu Figur 7.

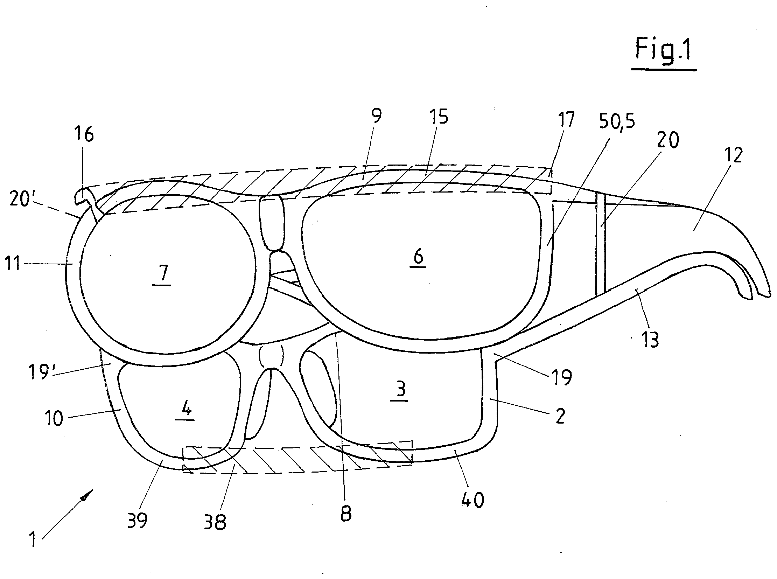

Figur 1 zeigt eine Brille 1, die aus dem Brillengestell 2 mit den klaren Brillengläsern 3, 4 und dem Zusatzgestell 5 mit den getönten Brillengläsern 6, 7 besteht. Das Zusatzgestell 5 ist bereits teilweise auf das Brillengestell 2 aufgeschoben, wobei die hier dargestellte Brillenspange 15 eigentlich erst auf die beiden Gestelle 2, 5 aufgeschoben wird, wenn beide wirksam aufeinander bzw. voreinander liegen. Die Brillenspange 15 wird dann auf den oberen Rand 8 des Brillengestells 2 und den oberen Rand 9 des Zusatzgestells 5 aufgeschoben, sodass beide miteinander verbunden eine Einheit bilden. Die Brillenglasumfassung 10 der klaren Brillengläser 3, 4 und die Brillenglasumfassung 11 der getönten Brillengläser 6, 7 sind nicht gleich, vor allen Dingen nicht gleich breit ausgebildet, weil insbesondere das als Sonnenbrille dienende Zusatzgestell 5 mit den getönten Brillengläsern 6, 7 das Brillengestell 2 umfassen soll, insbesondere aber meist und insbesondere bei Damen als Gesichtsschmuck mit zum Einsatz kommt. Die Bügel 12 und 13 sind im Bügelübergang 19, 20 gelenkig verbunden, sodass die Einheit aus Brillengestell 2 und Zusatzgestell 5 sich an den Kopf des Benutzers anschmiegen kann.

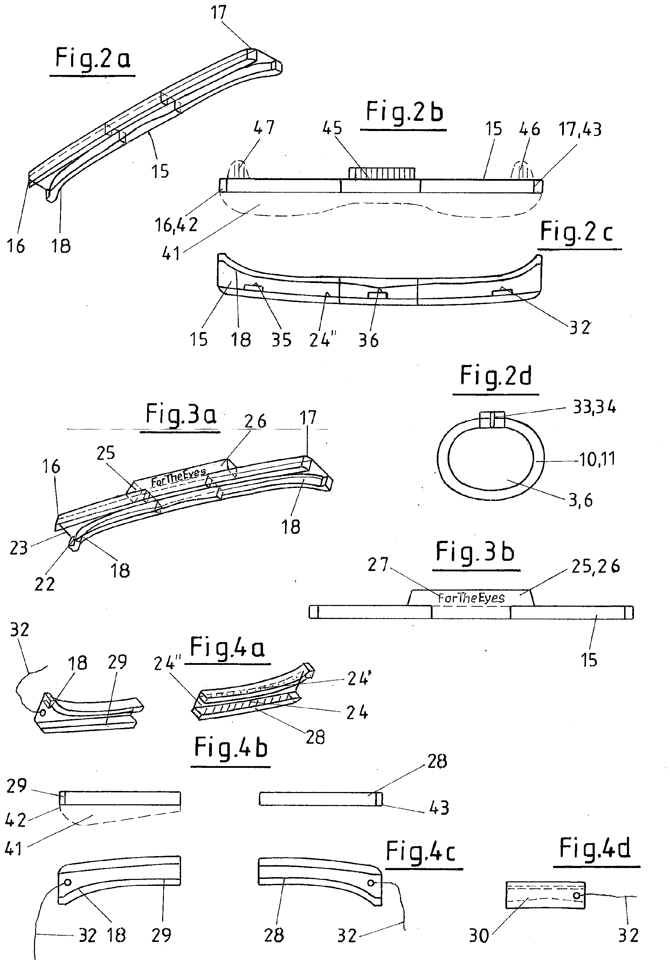

Die Brillenspange 15 reicht vom Ende 16 bis zum Ende 17 des Brillengestells 2, insbesondere des Zusatzgestells 5. Damit ist eine wirksame und dichte Verbindung beider Gestelle 2, 5 aneinander sichergestellt. An den beiden Enden ist eine insbesondere in Figur 2a erkennbare Biegung der Brillenspange 15 verwirklicht, sodass auch dieser Bügelübergang 19, 20 sicher von der Brillenspange 15 erfasst ist, was insbesondere ein nachteiliges Verschieben der Brillenspange 15 auf den beiden Gestellen 2, 5 unterbindet.

Die unteren Rundungen 39, 40 umfassend ist eine Gegenbrillenspange 38 einsetzbar, die insbesondere bei schweren Brillengläsern 3, 4 sich vorteilhaft auswirken kann.

Die beiden Bügelübergänge bei den Gestellen 2, 5 sind mit 19, 19' und 20, 20' gekennzeichnet.

Figur 2a zeigt eine Brillenspange 15 in perspektivischer Ansicht, sodass erkennbar ist, dass insbesondere die hier nicht erkennbaren Bügelübergänge 19, 20 vorteilhaft mit erfasst werden können, weil hier eine Biegung 18 vorgesehen ist. Diese Biegungen 18 sind an beiden Enden 16, 17 identisch. Erkennbar ist, dass diese Brillenspange 15, so wie sie dargestellt ist, auf die Gestelle 2, 5 gemäß Figur 1 aufgeschoben werden kann. Eine Seitenansicht der Brillenspange 15 zeigt Figur 2b, wobei hier als Möglichkeit gekennzeichnet ist, dass ein dachförmiger Rücksprung 41 verwirklicht ist, um dann das Brillengestell 2 in das Zusatzgestell 5 einlegen zu können. Ein Verrutschen beider Gestelle 2, 5 wird dadurch unterbunden, dass auf beiden Seiten 42, 43 und mittig Puffer 45, 46, 47 vorgesehen sind. Der dachförmige Rücksprung 41 ist hier auf der "falschen" Seite der Brillenspange 15 wiedergegeben, um die Puffer 45, 46, 47 deutlicher anzeigen zu können. Es versteht sich, dass die Puffer 45, 46, 47 damit unterhalb dieses dachförmigen Rücksprungs 41 angeordnet werden. Die Figuren 2c und 2d zeigen eine Ausführung, bei der Verbindung oder besser gesagt das Anlegen des Zusatzgestells 5 an das Brillengestell 2 mit Hilfe von Magneten erfolgt. Hierzu zeigt Figur 2d der Brillenglasumfassung 10, 11 zugeordnete Haftmagnete 33, 34, die mit den Gestellen 2, 5 zugeordneten Haftflächen 35, 36 korrespondieren. Dabei sind die Haftmagnete 33, 34 so eingestellt, dass ein bedingtes Lösen beider Gestelle 2, 5 immer noch möglich bleibt.

Figur 3a und 3b zeigen eine Ausführung, bei der der Brillenspange 15 ein Aufsatz 25 mit Werbefläche 26 zugeordnet ist. Hier ist vorteilhaft, dass die Beschriftung 27 so auf der Werbefläche 26 angeordnet ist, dass sie vorteilhaft für den Betrachter erkennbar ist.

Die Figur 4a zeigt eine zweiteilige Brillenspange 15, wobei die Teilspange 28 und die Teilspange 29 gleich ausgebildet sind, während die Teilspange 30 nur in Figur 4d wiedergegeben ist. Sie kann normalerweise auf die beiden anderen Teilspangen 28, 29 aufgeschoben werden. In der Regel werden aber diese beiden Teilspangen 28, 29 ohne die Teilspange 30 eingesetzt, weil sie aufgrund der Biegung 18 sicher auf den Gestellen 2, 5 aufzubringen sind. Vorteilhafterweise ist weiter vorgesehen, dass die Innenflächen 22, 23 wie auch in Figur 3a angedeutet, mit einer Beschichtung 24, 24', 24" versehen sind, um so das sichere Anlegen und das sichere Fixieren der Gestelle 2, 5 zu gewährleisten.

In Figur 4b ist angedeutet, dass auch hier ein dachförmiger Rücksprung vorgesehen werden kann, wenn dies erforderlich sein sollte. An den Biegungen 18 sind Fixierelemente 32 vorgesehen, die eine Verbindung der einzelnen Teilspangen 28, 29, 30 miteinander möglich machen und auch beispielsweise mit einem oder beiden der Gestelle 2, 5.

Der Übersichtlichkeit halber ist das Zusatzgestell 5 mit den getönten Brillengläsern 6, 7 mit dem Zusatzbezugszeichen 50 versehen, um deutlich zu machen, dass dieser Zusatz 50 dem Brillengestell 2 mit den klaren Brillengläsern 3, 5 zugeordnet wird und nicht umgekehrt.

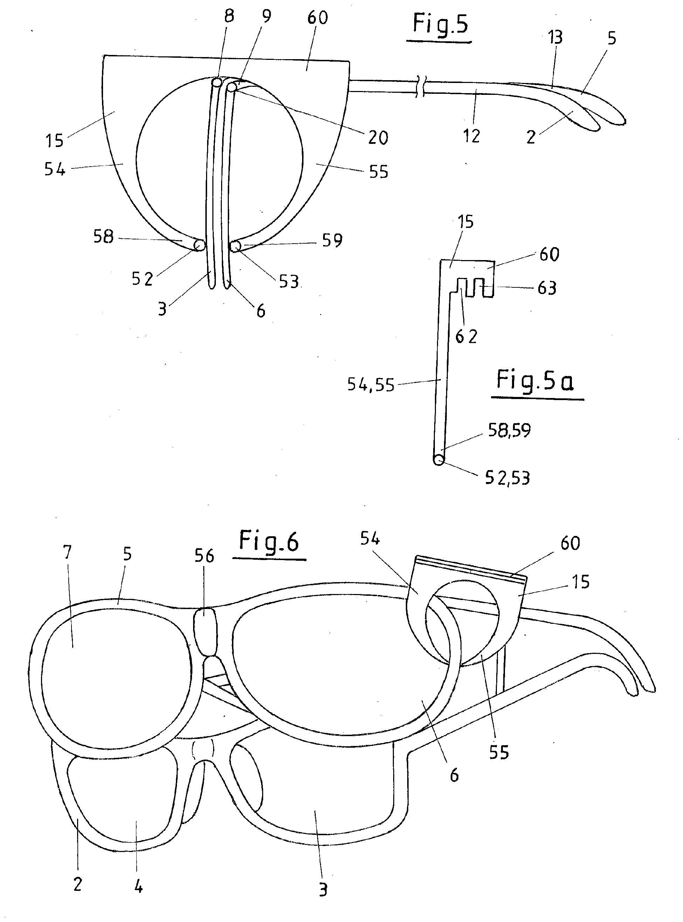

Figur 5 zeigt eine Ausführungsform der Brillenspange 15, bei der einer starren Basis 60 längliche Stützspangen 54, 55 zugeordnet sind, die mit ihren freien Enden 58, 59 auf die klaren Brillengläser 3, 4 und die getönten Brillengläser 6, 7 gegeneinander wirkend andrückend ausgebildet sind. Die freien Enden 58, 59 weisen mit begrenzt nachgiebigen Rundkörpern besetzte Stützpunkte 52, 53 auf, sodass die beiden Brillengestelle 2, 5 gegeneinander oder besser aneinander gedrückt werden. Eine stabile Einheit ist so gewährleistet.

Figur 5a zeigt die Brillenspange 15 in Seitenansicht, wobei deutlich wird, dass die Basis 60 unten Ausnehmungen 62, 63 aufweist, sodass diese Basis 60 richtig auf den Brillengestellen 2, 5 fixiert werden kann.

Figur 6 zeigt eine Brillenspange 15, die von oben auf das Brillengestellt 5 aufgeschoben ist und dass beim weiteren Überschieben des Brillengestells 5 über das Brillengestell 2 beide Brillengestelle 2, 5 mit den Stützspangen 54, 55 erfasst werden und gegen das Brillengestell 5 angedrückt werden. Es versteht sich, dass im Regelfall auf der anderen Seite der beiden Gestelle 2, 5 eine hier nicht gezeigte zweite Brillenspange angebracht ist. Beide Brillengläserpaare 3, 4 und 6, 7 sind über den Nasenbügel 56 miteinander verbunden.

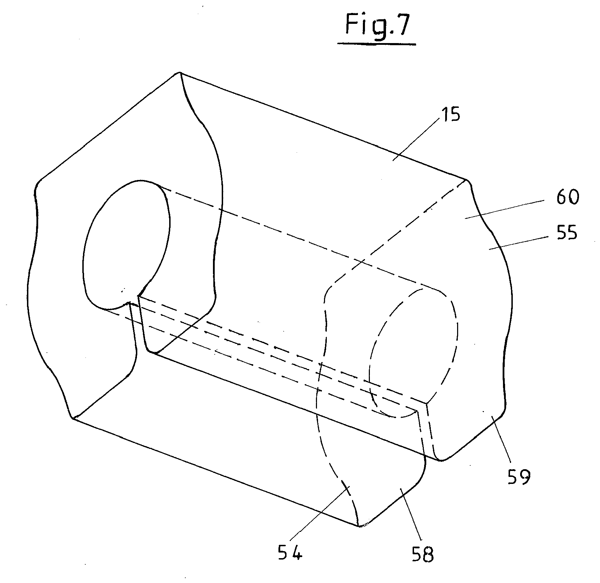

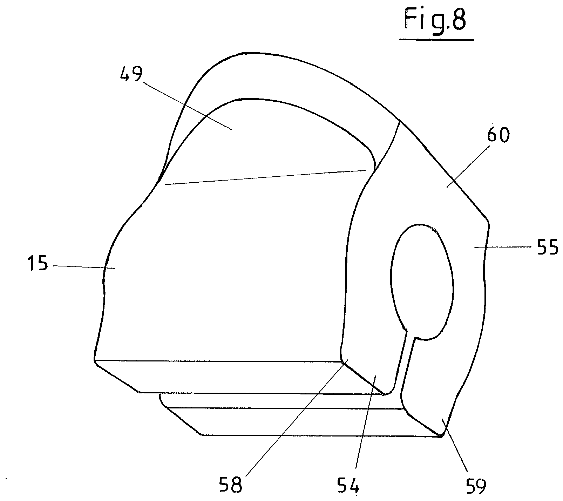

In Figur 7 und 8 ist schließlich eine Brillenspange 15 in Alleinstellung gezeigt. Die Brillenspange 15 verfügt über die rechts- und linksseitige Stützspange 54, 55 mit den freien Enden 58 und 59. Bei der Darstellung nach Figur 8 verfügt die Brillenspange 15 mit der Krallwirkung zusätzlich über ein Auflager 49 in Hinblick auf die lösbare Verbindung von Brillen- und Zusatzgestell.

Alle genannten Merkmale, auch die den Zeichnungen allein zu entnehmenden, werden allein und in Kombination als erfindungswesentlich angesehen.

## Patentansprüche

1. Brille mit einem der Sehstärke des Benutzers angepassten, klare Brillengläser (3, 4) aufweisenden Brillengestell (2) und einem Zusatz (50) mit Zusatzgestell (5) und mit getönten Brillengläsern (6, 7) zum Schutz der Augen eines Menschen vor den schädlichen Auswirkungen des Sonnenlichtes, wobei das die getönten Brillengläser (6, 7) aufweisende und der Form des Brillengestells (2) angepasste Zusatzgestell (5) mit dem Brillengestell (2) zu einer Einheit zusammengefügt ist,
**dadurch gekennzeichnet,**
**dass** das Brillengestell (2) mit den klaren Brillengläsern (3, 4) und das Zusatzgestell (5) mit den getönten Brillengläsern (6, 7) über eine auf die Ränder (8, 9) der Brillenglasumfassungen (10, 11) klemmbare Brillenspange (15) lösbar miteinander verbunden sind.

2. Brille nach Anspruch 1,
**dadurch gekennzeichnet,**
**dass** das Brillengestell (2) und das Zusatzgestell (5) über eine von oben auf die oberen Ränder (8, 9) der Brillenglasumfassungen (10, 11) klemmbare Brillenspange (15) lösbar miteinander verbunden sind.

3. Brille nach Anspruch 1,
**dadurch gekennzeichnet,**
**dass** die Brillenspange (15) auf die Brillengläserumfassungen (10, 11) aufgeklipst ist.

4. Brille nach Anspruch 1,
**dadurch gekennzeichnet,**
**dass** die Brillenspange (15) eine mit dem Zusatzgestell (5) mit den getönten Brillengläsern (6, 7) korrespondierende Breite aufweist und von Bügelübergang (20) zu Bügelübergang (20') reichend ausgebildet ist.

5. Brille nach Anspruch 1,
**dadurch gekennzeichnet,**
**dass** die Brillenspange (15) an beiden Enden (16, 17) eine dem Bügelübergang (19) des Brillengestells (2) und Bügelübergang (20) des Zusatzgestells (5) angepasste Biegung (18) aufweist.

6. Brille nach Anspruch 1,
**dadurch gekennzeichnet,**
**dass** die Brillenspange (15) auf den Innenflächen (22, 23) die am Zusatzgestell (5) und dem Brillengestell (2) anliegen, eine begrenzt nachgiebige Beschichtung (24) aufweist.

7. Brille nach Anspruch 6,
**dadurch gekennzeichnet,**
**dass** die begrenzt nachgiebige Beschichtung (24) durch ihre Dicke nur die Brillengläserumfassung (10, 11) vom Brillengestell (2) oder vom Zusatzgestell (5) allein fixierend ausgebildet ist.

8. Brille nach Anspruch 1,
**dadurch gekennzeichnet,**
**dass** die Brillenspange (15) mittig mit einem Aufsatz (25) ausgerüstet ist, der Werbeflächen (26) aufweist.

9. Brille nach Anspruch 1,
**dadurch gekennzeichnet,**
**dass** die Brillenspange (15) aus drei Teilspangen (28, 29, 30) besteht, die lösbar miteinander verbunden sind.

10. Brille nach Anspruch 7,
**dadurch gekennzeichnet,**
**dass** die Teilspangen (28, 29, 30) miteinander und/oder mit dem Bügelgestell (2) und/oder dem Zusatzgestell (5) über ein Fixierelement (32) verbunden sind.

11. Brille nach Anspruch 1,
**dadurch gekennzeichnet,**
**dass** die Brillenspange (15) mit Haftmagneten (33, 34) ausgerüstet ist, die mit dem Brillengestell (2) und dem Zusatzgestell (5) zugeordneten Haftflächen (35, 36) korrespondierend angeordnet sind.

12. Brille nach Anspruch 1,
**dadurch gekennzeichnet,**
**dass** für schwere Brillengläser (3, 4, 6, 7) eine Gegenbrillenspange (38) vorgesehen ist, die die unteren Rundungen (39, 40) der Brillengläser (3, 4, 6, 7) berücksichtigend und von unten auf das Zusatzgestell (5) und das Brillengestell (2) aufschiebbar ausgebildet ist.

13. Brille nach Anspruch 1,
**dadurch gekennzeichnet,**
**dass** die Brillenspange (15) eine starre Basis (60) und zwei, eine Krallwirkung erzeugende Stützspangen (53, 54) aufweist, die an den Bügelübergängen (19, 20) Druck auf die klaren und die getönten Brillengläser (3, 4, 6, 7) ausübend auf diese aufschiebbar ausgebildet sind.

14. Brille nach Anspruch 13,
**dadurch gekennzeichnet,**
**dass** die freien Enden (58, 59) der Stützspangen (53, 54) aus begrenzt flexiblem Material bestehende Stützpunkte (52, 53) aufweisen.

15. Brille nach Anspruch 13,
**dadurch gekennzeichnet,**
**dass** die Basis (60) das Aufschieben auf die Bügel (12, 13) ermöglichende Ausnehmungen (62, 63) aufweist.

16. Brille nach Anspruch 1,
**dadurch gekennzeichnet,**
**dass** die Brillenspange (15) von der Seite her auf die Brillengestelle (2, 5) aufschiebbar ausgebildet sind.

17. Brille mit einem der Sehstärke des Benutzers angepassten klaren Brillengläsern (3, 4) aufweisenden Brillengestell (2) und einem Zusatz (50) mit Zusatzgestell (5) und mit getönten Brillengläsern (6, 7) zum Schutz der Augen eines Menschen vor den Auswirkungen des Sonnenlichtes, wobei das Zusatzgestell (5) brillenförmig ausgebildet und das Brillengestell (2) mit den klaren Brillengläsern (3, 4) mit vorgegebener Sehstärke umfassend und dieses außen überdeckend ausgebildet ist, wobei der obere Rand (9) des Zusatzgestells (5) in Richtung Brillengestell (2) verbreitert ausgeführt ist,
**dadurch gekennzeichnet,**
**dass** das Zusatzgestell (5) mit den getönten Brillengläsern (6, 7) am oberen Rand (9) einen dachförmigen Rücksprung (41) aufweist und dass mittig und/oder an beiden Seiten (42, 43) der Brillengläser (3, 4, 6, 7) ein aus nachgiebigem Material bestehender Puffer (45, 46, 47) angeordnet ist, der sich am oberen Rand (9) der getönten Brillengläser (6, 7) und am oberen Rand (8) der klaren Brillengläser (3, 4) bzw. des Brillengestells (2) abstützend ausgebildet ist.
